# EUROPÄISCHE PATENTANMELDUNG

(11) **EP 2 399 727 A1**
(43) Veröffentlichungstag der Anmeldung: **28.12.2011**
(21) Anmeldenummer: 10167335.8
(22) Anmeldetag: 25.06.2010
(51) Int. Cl.: B29C 70/56, B62D 21/00, B62D 21/02

(54) **Fahrgestellbauteil für Kraftfahrzeuge**

(71) Anmelder: ISE Automotive GmbH, 51702 Bergneustadt (DE)
(72) Erfinder: Günther, Stefan, 53783, Eitorf (DE)
(74) Vertreter: Peters, Arijit Christian

(57) **Zusammenfassung**

Die Erfindung betrifft ein Fahrgestellbauteil für Kraftfahrzeuge, insbesondere Fahrzeugintegralträger (2), mit einem metallischen Rahmenbauteil und einem das Rahmenbauteil verstärkenden Strukturbauteil. Um ein Fahrgestellbauteil der eingangs genannten Art bereitzustellen, welches ein geringes Gewicht aufweist und die steigenden Anforderungen an das Crashverhalten sowie Energieaufnahme erfüllt, ist vorgesehen, dass das Strukturbauteil als faserverstärkter Kunststoffverbundkörper (3,3a) ausgebildet ist.

## Beschreibung

Die Erfindung betrifft ein Fahrgestellbauteil für Kraftfahrzeuge, insbesondere Fahrzeugintegralträger, mit einem metallischen Rahmenbauteil und einem das Rahmenbauteil verstärkenden Strukturbauteil.

Fahrgestellbauteile wie Fahrzeugintegralträger, die zur Anordnung von Fahrzeugkomponenten und Aggregaten dienen, sind hinlänglich aus dem Stand der Technik bekannt. Obgleich bei modernen Fahrzeugen mit selbstragender Karosserie Fahrwerksbauteile wie Radaufhängungen, Lenkungen oder dergleichen nicht mehr zu den Fahrgestellbauteilen zählen, werden diese im Rahmen der Erfindung neben den eigentlichen Fahrgestellelementen wie den tragenden Rahmen-, bzw. Chassisbauteilen als unter die Fahrgestellbauteile fallend angesehen.

Allgemein dienen Fahrgestellbauteile nicht nur der Aufnahme von Fahrzeugkomponenten, sondern tragen neben der Fahrzeugkarosserie in einem erheblichen Anteil zum Crashverhalten der jeweiligen Fahrzeuge bei. Neben der Eignung, Energie durch Verformung abzubauen, dienen einzelne Bauteile, wie bspw. ein Integralträger bzw. ein Fahrwerkhilfsrahmen auch zur Aufnahme von ergänzenden Crashelementen, sog. Crashboxen, welche im Falle von Kollisionen mit niedrigen Geschwindigkeiten eine Beschädigung des Integralträgers vermeiden.

Obgleich die bekannten Fahrgestellbauteile derzeit die an sie gestellten Anforderungen erfüllen, weisen sie den Nachteil auf, dass sie den zukünftigen Anforderungen der Automobilhersteller an ein geringeres Gewicht bei gleichzeitig steigenden Anforderungen hinsichtlich der vom Gesamtsystem aufnehmbaren Intrusionskräfte im Falle eines Crashs mit einer damit verbundenen höheren Energieaufnahme kaum noch gerecht werden.

Der Erfindung liegt daher die Aufgabe zugrunde, ein Fahrgestellbauteil der eingangs genannten Art bereitzustellen, welches ein geringes Gewicht aufweist und die steigenden Anforderungen an das Crashverhalten sowie Energieaufnahme erfüllt.

Die Erfindung löst die Aufgabe durch ein Fahrgestellbauteil mit dem Merkmal des Anspruchs 1. Vorteilhafte Weiterbildungen der Erfindung sind in den abhängigen Ansprüchen angegeben.

Kennzeichnend für das erfindungsgemäße Fahrgestellbauteil, bei dem es sich im Rahmen der Anmeldung, wie bereits eingangs dargelegt, um die klassischen Fahrgestellbauteile wie bspw. Längsträger, Querträger oder Integralträger, aber auch um Fahrwerksbauteile wie bspw. Radaufhängungen oder Lenkungskomponenten handeln kann, ist, daß das mit dem metallischen Rahmenbauteil verbundene Strukturbauteil als faserverstärkter Kunststoffverbundkörper ausgebildet ist. Die Verwendung eines Kunststoffverbundkörpers steigert in ergänzendem Maße die Steifigkeit des Fahrgestellbauteils, so daß höhere auf das Rahmenbauteil wirkende Kräfte durch das Fahrgestellbauteil ertragen bzw. eine höhere Energieaufnahme durch das Bauteil erfolgen kann.

Die Verwendungen von Fasern im Kunststoffverbundkörper gewährleisten neben einer gesteigerten Festigkeit des mit dem Kunststoffverbundkörper verbundenen Rahmenbauteils zudem einen stabilen Verbund des Kunststoffverbundkörpers, nachdem die Fasern auch bei erhöhten Kräften die Integrität des Körpers sicherstellen.

Darüber hinaus weist das erfindungsgemäße Fahrgestellbauteil den Vorteil auf, daß im Vergleich zu herkömmlichen Fahrwerksbauteilen bei einem geringeren Gewicht gleiche Steifigkeiten sowie Energieaufnahmeeigenschaften erreicht bzw. daß bei im Vergleich gleichem Gewicht eine höhere Steifigkeit sowie ein höheres Energieaufnahmeniveau erzielt werden kann. Insbesondere die Möglichkeit der Gewichtsverringerung des Bauteils gegenüber bekannten Fahrgestellbauteilen ermöglicht es den zukünftigen Anforderungen der Fahrzeughersteller an das zu erzielende Gewicht gerecht zu werden und führt überdies zu einer CO₂-Einsparung. Insbesondere bei einer frontseitigen und/oder seitlichen Intrusion werden Zugspannungen besonders zuverlässig aufgenommen. Ein weiterer Vorteil des erfindungsgemäßen Fahrgestellbauteils gegenüber bekannten Fahrgestellbauteilekonzepten, insbesondere Integralträgerkonzepten, besteht in der günstigen Akustikabstimmungsmöglichkeit des Fahrgestellbauteiles im Karosserieverbund, da keine größeren, schwingenden Flächen vorhanden sind, die ggf. ein Klappern oder Knarzen verursachen.

Die Anordnung des Kunststoffverbundkörpers an dem metallischen Rahmenbauteil kann grundsätzlich in beliebiger Weise erfolgen. Nach einer besonders vorteilhaften Ausgestaltung der Erfindung ist der Kunststoffverbundkörper jedoch an das Rahmenbauteil angespritzt oder angeformt. Durch diese Ausgestaltung der Erfindung kann eine besonders gute Anbindung des Kunststoffverbundkörpers an dem Rahmenbauteil erreicht werden. Ferner kann in kostengünstiger Weise prozesstechnisch durch das Anspritzen bzw. Anformen eine sehr genaue Positionierung des Kunststoffverbundkörpers an dem Rahmenbauteil erreicht werden. Darüber hinaus bildet der so am Rahmenbauteil angeordnete Kunststoffverbundkörper eine besonders stabile Einheit, bei der im besonderen Maße einer Trennung von Rahmenbauteil und Kunststoffverbundkörper vorgebeugt wird.

Alternativ oder ergänzend zur zuvor dargestellten vorteilhaften Anordnung des Kunststoffverbundkörpers durch Anspritzen oder Anformen kann nach einer weiteren Ausgestaltung der Erfindung der Kunststoffverbundkörper durch Kleben und/oder mit Befestigungselementen, insbesondere Nieten mit dem Rahmenbauteil verbunden sein. Diese Ausgestaltung der Erfindung ermöglicht es, den Kunststoffverbundkörper unabhängig vom Herstellungsprozeß des metallischen Rahmenbauteils zu fertigen und diese in einem nachfolgenden Montageschritt zusammenzufügen. Denkbar wäre hier auch die Verbindung durch Durchsetzfügen. Durch Kleben und/oder separate Befestigungselemente wie Schrauben, bzw. besonders vorteilhafterweise Nieten kann eine besonders hohe Positionssicherheit in einfacher Weise erreicht werden kann. Weiterhin ist die Verbindung ebenso durch Eigenmaterialnieten darstellbar.

Die Ausgestaltung des Kunststoffverbundkörpers kann grundsätzlich in beliebiger Weise und somit entsprechend den an das Fahrgestellbauteil gestellten Anforderungen erfolgen. So kann der Kunststoffverbundkörper derart ausgebildet sein, daß er sich über das gesamte Rahmenbauteil erstreckt. Es ist jedoch auch eine Ausgestaltung möglich, wonach der Kunststoffverbundkörper nur in Teilbereichen des Rahmenbauteils, bspw. nur den einer stärkeren Belastung unterliegenden Bereichen angeordnet ist, wodurch in ergänzender Weise eine Gewichtsreduzierung des Fahrgestellbauteils erreicht werden kann. Besonders vorteilhafterweise ist der Kunststoffverbundkörper jedoch derart ausgebildet und/oder angeordnet, daß das Rahmenbauteil in den Bereichen verstärkt ist, in denen das Rahmenbauteil mit Anbauteilen verbindbar ist. Zu Anbauteilen zählen dabei bspw. Crashboxen, Lenkungsbestandteile, Querlenker, Motorlager oder dergleichen, welche an den Fahrgestellbauteilen montiert werden. Wenn das Rahmenbauteil aufgrund der Anbindungsmöglichkeit eine strukturelle Schwächung aufweist, kann diese durch den Kunststoffverbundkörper ausgeglichen werden.

Nach einer Weiterbildung der Erfindung kann der Kunststoffverbundkörper auch selbst Aufnahmen zur Anordnung von Anbauteilen aufweisen. Demgemäß ist der Kunststoffverbundkörper mit integrierten oder angeformten Aufnahmen bzw. Einrichtungen versehen, welche entsprechend der anzuschließenden Anbauteile ausgebildet sind. Diese Ausgestaltung der Erfindung ermöglicht es, auf eine Bearbeitung des Rahmenbauteils zum Zwecke der Anordnung der Anbauteile zu verzichten, so daß dieser keine Schwächungen der Struktur erfährt. Darüber hinaus lassen sich die Aufnahmen bzw. Einrichtungen im Rahmen des Herstellungsprozesses des Kunststoffverbundkörpers besonders einfach und kostengünstig herstellen. Der Kunststoffverbundkörper kann dabei bspw. zur Aufnahme von Crashboxen, Lenkungsbauteilen, Querlenkern, Verstrebungen, Motorlagern oder dergleichen vorgesehen sein.

Die Ausgestaltung des Kunststoffverbundkörpers kann grundsätzlich in beliebiger Weise erfolgen, wobei vorzugsweise eine Anpassung des Kunststoffverbundkörpers an die Form des metallischen Rahmenbauteils erfolgt. Darüber hinaus kann der Kunststoffverbundkörper in seinen Abmessungen entsprechend der Belastungsverläufe im Falle eines Crashs ausgelegt sein. Besonders vorteilhafterweise weist der Kunststoffverbundkörper eine stabilisierende Geometrie, insbesondere eine Waben- und/oder Rippengeometrie auf, welche besonders vorteilhafterweise an die Geometrie und die im Crashfall auftretenden Lastverläufe des Rahmenbauteils angepasst ist.

Gemäß dieser Ausgestaltung der Erfindung kann durch eine stabilisierende Geometrie, bspw. durch Ausbildung aussteifender Elemente, die eine Waben- oder Rippengeometrie bilden, bei verringertem Materialgewicht für den Kunststoffverbundkörper eine im Vergleich zu Vollkörpern gleichbleibend hohe Festigkeit erreicht werden. Insbesondere im Falle der Anpassung der Ausrichtung der aussteifenden Elemente, wie der Waben und/oder Rippen gegenüber der Struktur des Rahmenbauteils kann in ergänzender Weise bei Beibehaltung geforderter Festigkeitseigenschaften eine ergänzende Gewichtsreduzierung erzielt werden. Im Falle einer Schalenbauweise des Rahmenbauteils besteht die Möglichkeit, daß sich die Fahrgestellbauteile bei Verformung an dem entsprechend ausgebildeten Kunststoffverbundkörper, insbesondere den stabilisierenden Waben und/oder Rippen formschlüssig abstützen können.

Die Anordnung der stabilisierenden Geometrie kann sich dabei sowohl über den gesamten Kunststoffverbundkörper aber auch nur über besonders gefährdete Bereiche des Rahmenbauteils erstrecken, so daß ein gezieltes Verformungsverhalten des Rahmenbauteils erreicht werden kann. Insbesondere ist es möglich, auf diese Weise bestimmte Bereiche vorzusehen, in denen kontrolliert ein Einbeulen oder Einknicken zugelassen und/oder verhindert werden kann.

Wesentlich für die Festigkeitseigenschaften des Kunststoffverbundkörpers sind die in diesen eingebetteten Faserelemente. Nach einer besonders vorteilhaften Weiterbildung der Erfindung sind diese gerichtet, insbesondere längs- und/oder quergerichtet in dem Kunststoffverbundkörper angeordnet, wobei vorzugsweise diese Ausrichtung der Faserelemente mit Bezug auf die Position der Kunststoffverbundkörper an dem Rahmenelement vorgenommen wird. Hierdurch ist es möglich, die Steifigkeit in besonderer Weise an die im Crashfall vorliegenden Belastungen anzupassen. Eine Ausrichtung der Fasern ermöglicht eine Versteifung in verschiedene Richtungen, bspw. um die Eigenschaften zur Aufnahme von Zugspannungen zu erhöhen bzw. zu verringern. Die Verwendung von längs- oder quergerichteten Fasern im Strukturbauteil verbessert dabei im besonderen Maße die Aufnahmefähigkeit von auftretenden Zugspannungen.

Neben der Möglichkeit, über eine Ausrichtung der Fasern Festigkeitseigenschaften des Kunststoffverbundkörpers und damit des Fahrgestellbauteils einzustellen, besteht ferner nach einer Weiterbildung der Erfindung, wonach die Faserelemente vorgespannt im Kunststoff angeordnet sind, die Möglichkeit, die Widerstandsfähigkeit in ergänzender Weise zu steigern, so daß im Falle eines Crashs höhere Aufprallbelastungen sowie Intrusionskräfte von dem Fahrgestellbauteil aufgenommen bzw. eine höhere Energieaufnahme über das Fahrgestellbauteil möglich ist.

Nach einer Weiterbildung der Erfindung können die Faserelemente, bei denen es sich sowohl um metallische oder nichtmetallische als auch um eine Kombination von metallischen oder nichtmetallischen Fasern handeln kann, derart im Kunststoffverbundkörper angeordnet, daß eine Überlappung von Faserelementen vorliegt, insbesondere eine Dopplung der Faserelemente gegeben ist. Eine entsprechende Ausgestaltung der Erfindung stellt eine weitere Möglichkeit dar, die Festigkeitseigenschaften des Kunststoffverbundkörpers und damit des Fahrgestellbauteils zu steigern. Über eine entsprechende Ausgestaltung des Kunststoffverbundkörpers, die sich, wie die gesamte Ausgestaltung des Kunststoffverbundkörpers nicht über den gesamten Körper erstrecken muß, sondern auch eine partiell unterschiedliche Ausgestaltung zulässt, stellt eine weitere Anpassungsmöglichkeit hinsichtlich der lokalen bzw. Gesamtwiderstandsfähigkeit des Kunststoffverbundkörpers dar.

Das Rahmenbauteil des Fahrgestellbauteils kann grundsätzlich in beliebiger Weise ausgestaltet sein. Denkbar sind hier auch geschlossene Profile, welche mit einem diese partiell oder vollständig umgebenden Kunststoffverbundkörper ausgestattet sind. Nach einer besonders vorteilhaften Ausgestaltung der Erfindung ist das Rahmenbauteil jedoch als offenes Profilbauteil, insbesondere im Querschnitt U-förmiges Profilbauteil ausgebildet, wobei der Kunststoffverbundkörper an den Öffnungsquerschnitt des Profilbauteils angepasst und in diesem angeordnet ist.

Gemäß dieser Ausgestaltung der Erfindung weist das Rahmenbauteil in dessen Längsachsenrichtung betrachtet zumindest einen Öffnungsquerschnitt auf, welcher den Zugang zum Inneren des Profilbauteils ermöglicht. Diese Ausgestaltung des Rahmenbauteils ermöglicht eine besonders einfache und kostengünstige Anordnung des Kunststoffverbundkörpers am Profilbauteil. Insbesondere im Falle eines U-förmig ausgebildeten Rahmenbauteils läßt sich der Kunststoffverbundkörper besonders einfach innerhalb des Rahmenbauteils anordnen, wobei der bspw. mit einem Karosseriestrukturkleber mit dem Rahmenbauteil flächig verbundene Kunststoffverbundkörper aufgrund der hohen Kontaktfläche besonders zuverlässig an dem Rahmenbauteil angeordnet ist und damit Öffnungstendenzen des Profils bei Belastung entgegenwirkt. Insbesondere im Falle einer quer zur Öffnung verlaufenden Faserrichtung wird diesen Öffnungstendenzen besonders vorteilhaft entgegengewirkt.

Der zur Herstellung des Kunststoffverbundkörpers verwendete Kunststoff kann entsprechend den gestellten Anforderungen frei gewählt werden. So können neben einer Berücksichtigung der zu erreichenden Festigkeitseigenschaften ferner auch weitere Bedingungen wie Recyclingfähigkeit und Herstellungskosten berücksichtigt werden. Besonders vorteilhafterweise wird dabei der Kunststoffverbundkörper aus einem Thermoplast oder Duroplast gebildet, wobei insbesondere der Thermoplast in besonderer Weise ein einfache Recyclingmöglichkeit zulässt.

Nachfolgend werden Ausführungsbeispiele der Erfindung anhand von Zeichnungen erläutert. In den Zeichnungen zeigen:
- Fig. 1: In einer perspektivischen Darstellung ein als Integralträger ausgebildetes metallisches Rahmenbauteil;
- Fig. 2: den Integralträger von Fig. 1 mit daran angeordneten Kunststoffverbundkörpern und
- Fig. 3: einen zweiteiligen Integralträger mit Kunststoffverbundkörpern in einer Explosionsdarstellung.

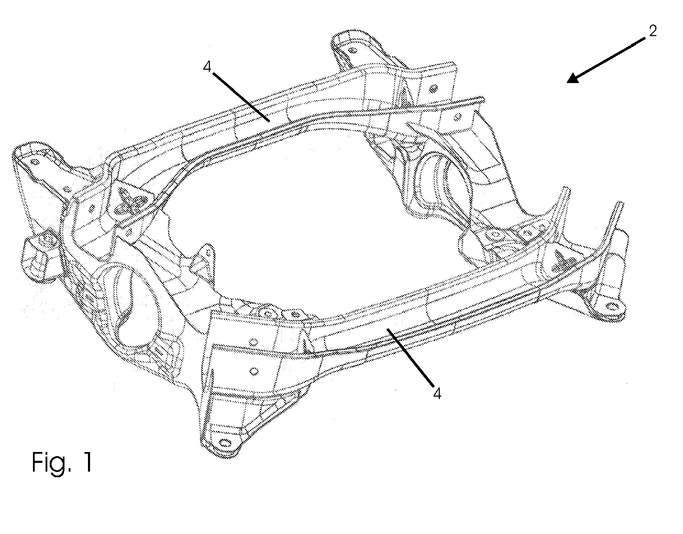

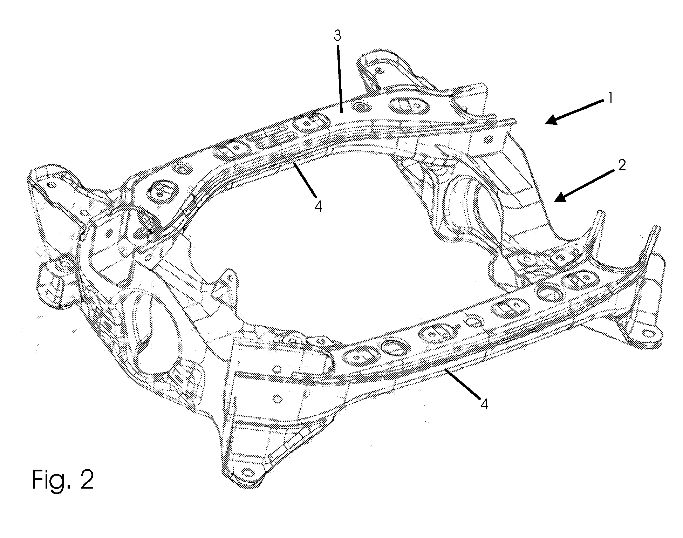

In Fig. 1 ist in einer perspektivischen Darstellung ein als Integralträger 2 ausgebildetes metallisches Rahmenbauteil dargestellt. Der Integralträger 2 weist zwei im Querschnitt U-förmige Querträger 4 auf, welche im Wesentlichen parallel zueinander verlaufen. Die U-förmigen Querträger 4 weisen einen Öffnungsquerschnitt auf, in den zur Verstärkung jeweils ein Kunststoffverbundkörper 3 zur Bildung eines Fahrgestellbauteils 1 eingesetzt ist. Der Kunststoffverbundkörper 3 erhöht das Energieaufnahmeniveau des Fahrgestellbauteils 1 und ist darüber hinaus derart ausgeführt, daß es den Innenraum der Querträger 4 gegenüber der Umgebung abgrenzt (vgl. Fig. 2).

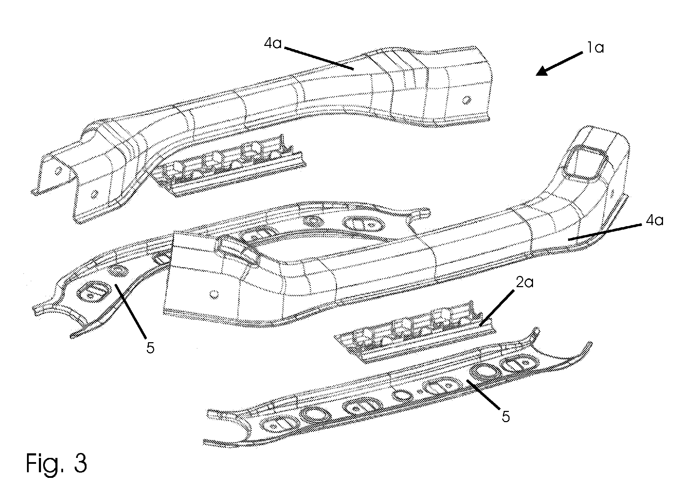

In Fig. 3 ist eine weitere Ausführungsform eines Fahrgestellbauteils 1a als zweiteiliger Integralträger bestehend aus zwei Querträgern 4a dargestellt. In die aufgrund der im Querschnitt U-förmigen Gestalt der Querträger 4a vorliegenden Öffnung ist jeweils ein Kunststoffverbundkörper 3a eingesetzt, welcher die Festigkeitseigenschaften der Querträger 4a und damit des Fahrgestellbauteils 1a steigert. Zum Schutz des Innenraums der Querträger sowie der weiteren Steifigkeitserhöhung der Querträger, wie z. B. Ansetzen eines Wagenhebers in diesen Bereichen 4a sind die Öffnungen nach der Anordnung der Kunststoffverbundkörper 3a durch Abdeckungen 5 verschlossen.

## Patentansprüche

1. Fahrgestellbauteil für Kraftfahrzeuge, insbesondere Fahrzeugintegralträger, mit einem metallischen Rahmenbauteil und einem das Rahmenbauteil verstärkenden Strukturbauteil, **dadurch gekennzeichnet, dass** das Strukturbauteil als faserverstärkter Kunststoffverbundkörper (3, 3a) ausgebildet ist.

2. Fahrgestellbauteil nach Anspruch 1, **dadurch gekennzeichnet, dass** der Kunststoff verbundkörper (3, 3a) an das Rahmenbauteil (2, 2a) angespritzt und/oder angeformt ist.

3. Fahrgestellbauteil nach Anspruch 1 oder 2, **dadurch gekennzeichnet, dass** der Kunststoffverbundkörper (3, 3a) durch Kleben und/oder mit Befestigungselementen, insbesondere Nieten mit dem Rahmenbauteil(2, 2a) verbunden ist.

4. Fahrgestellbauteil nach einem der vorhergehenden Ansprüche, **dadurch gekennzeichnet, dass** der Kunststoffverbundkörper(3, 3a) derart ausgebildet und/oder angeordnet ist, dass das Rahmenbauteil(2, 2a) im Anbindungsbereich an mit dem Rahmenbauteil (2, 2a) verbindbaren Anbauteilen verstärkt ist.

5. Fahrgestellbauteil nach einem der vorhergehenden Ansprüche, **dadurch gekennzeichnet, dass** der Kunststoffverbundkörper (3, 3a) Aufnahmen zur Anordnung von Anbauteilen aufweist.

6. Fahrgestellbauteil nach einem der vorhergehenden Ansprüche, **dadurch gekennzeichnet, dass** die Aufnahmen an dem Kunststoffverbundkörper (3, 3a) angeformt sind.

7. Fahrgestellbauteil nach einem der vorhergehenden Ansprüche, **dadurch gekennzeichnet, dass** der Kunststoffverbundkörper (3, 3a) eine stabilisierende Geometrie, insbesondere eine Waben- und/oder Rippengeometrie aufweist.

8. Fahrgestellbauteil nach einem der vorhergehenden Ansprüche, **dadurch gekennzeichnet, dass** die Faserelemente gerichtet, insbesondere längs- und/oder quergerichtet in dem Kunststoffverbundkörper (3, 3a) angeordnet sind.

9. Fahrgestellbauteil nach einem der vorhergehenden Ansprüche, **dadurch gekennzeichnet, dass** die Faserelemente vorgespannt sind.

10. Fahrgestellbauteil nach einem der vorhergehenden Ansprüche, **dadurch gekennzeichnet, dass** in dem Kunststoffverbundkörper (3, 3a) eine Überlappung von Faserelementen, insbesondere eine Dopplung der Faserelemente vorliegt.

11. Fahrgestellbauteil nach einem der vorhergehenden Ansprüche, **dadurch gekennzeichnet, dass** das Rahmenbauteil (2, 2a) als offenes Profilbauteil, insbesondere im Querschnitt U-förmiges Profilbauteil ausgebildet ist, wobei der Kunststoffverbundkörper (3, 3a) an den Öffnungsquerschnitt des Profilbauteils (2, 2a) angepasst und in diesem angeordnet ist.

12. Fahrgestellbauteil nach einem der vorhergehenden Ansprüche, **dadurch gekennzeichnet, dass** die Faserelemente des Kunststoffverbundkörpers (3, 3a) quer zur Öffnung des Profilbauteils (2, 2a) verlaufen.

13. Fahrgestellbauteil nach einem der vorhergehenden Ansprüche, **dadurch gekennzeichnet, dass** der Kunststoffverbundkörper (3, 3a) aus einem Thermoplast oder Duroplast gebildet ist.

14. Fahrgestellbauteil nach einem der vorhergehenden Ansprüche, **dadurch gekennzeichnet, dass** die Faserelemente nicht-metallisch sind.

15. Fahrgestellbauteil nach einem der vorhergehenden Ansprüche, **dadurch gekennzeichnet, dass** der Öffnungsquerschnitt des Profilbauteils (2, 2a) durch eine Abdeckung (5) verschlossen ist.

16. Fahrgestellbauteil nach einem der vorhergehenden Ansprüche, **dadurch gekennzeichnet, dass** der metallische Grundkörper aus einem hochfesten, warmumgeformten, durch Gießen hergestellten Metallwerkstoff und/oder tiefgezogenem Metallwerkstoff gebildet ist.
